# EUROPEAN PATENT APPLICATION

(11) **EP 4 725 800 A1**
(43) Date of publication of application: **15.04.2026**
(21) Application number: 25174675.6
(22) Date of filing: 07.05.2025
(51) Int. Cl.: B62D 15/02, G05D 1/00

(54) **PARKING ASSISTANCE SYSTEM FOR VEHICLE**

(30) Priority: 11.10.2024 KR 20240138838
(71) Applicant: Hyundai Mobis Co., Ltd., Gangnam-gu Seoul 06141 (KR)
(72) Inventor: SHIN, Kyung Sik, 16891 Yongin-si, Gyeonggi-do (KR); KIM, Seung Hyeon, 16891 Yongin-si, Gyeonggi-do (KR); JEONG, Jun Seop, 16891 Yongin-si, Gyeonggi-do (KR); SHIM, Yeon Joo, 16891 Yongin-si, Gyeonggi-do (KR); CHAE, Ji Hyun, 16891 Yongin-si, Gyeonggi-do (KR); LEE, Chang Jun, 16891 Yongin-si, Gyeonggi-do (KR); YU, Ji Sang, 16891 Yongin-si, Gyeonggi-do (KR)
(74) Representative: Vossius & Partner Patentanwälte Rechtsanwälte mbB

(57) **Abstract**

A parking assistance system for a vehicle includes a route learning part configured to learn a parking route based on a route that the vehicle has traveled from a learning start point until the vehicle is parked at a learning end point; and a route tracking part configured to control the vehicle so that the vehicle enters the selected parking route and travels the selected parking route from an entering point which corresponds to the learning start point to a target point that corresponds to the learning end point.

## Description

### TECHNICAL FIELD

The present disclosure relates to a parking assistance system that assists in parking a vehicle on the basis of a learned route.

### BACKGROUND

Parking assistance functions have become essential technologies for reducing a driver's burden of parking a modem vehicle and improving safety.

Examples of the parking assistance functions include an autonomous parking system that allows a vehicle to automatically detect a parking space and be parked without a driver's intervention, a parallel parking assistance system that assists in parking a vehicle by automatically adjusting a direction and a speed of the vehicle in a complex parallel parking situation, a parking warning system that monitors the surroundings of a vehicle and informs a driver of a distance from an obstacle or another vehicle, and a surround view monitoring system (360-degree camera system) that provides a 360-degree view of the surrounding of the vehicle to minimize blind spots when parking and enable accurate steering in a parking space.

These technologies may play an important role in reducing the driver's parking stress, and particularly preventing an accident in a narrow space or a complex parking situation.

However, because these parking assistance functions in the related art require sophisticated and complex computations to generate and optimize routes, an error is likely to occur in a complex environment or a driver's manipulation may be eventually required. Accordingly, there is a need for a parking assistance function capable of being simply implemented and minimizing the driver's manipulation.

The foregoing explained as the background is intended merely to aid in the understanding of the background of the present disclosure, and is not intended to mean that the present disclosure falls within the purview of the related art that is already known to those skilled in the art.

### SUMMARY

Accordingly, the present disclosure has been made keeping in mind the above problems occurring in the related art, and the present disclosure is intended to provide a parking assistance system capable of providing a route learning function and a route tracking function to park a vehicle on the basis of a learned route.

Technical problems of the present disclosure are not limited to the aforementioned technical problems, and other technical problems, which are not mentioned above, may be clearly understood by those skilled in the art from the following descriptions.

In order to achieve the above-mentioned object, an embodiment of the present disclosure provides a parking assistance system for a vehicle, the parking assistance system including: a route learning part configured to learn a parking route based on as a route traveled by the vehicle from a learning start point until the vehicle is parked at a learning end point when a route learning mode is activated; and a route tracking part configured to control the vehicle so that when a route tracking mode is activated and any one of at least one pre-learned parking route and a tracking direction are selected, the vehicle enters the selected parking route and travels the selected parking route from an entering point which corresponds to the learning end point to a target point which corresponds to the learning end point of the selected parking route.

According to various embodiments of the present disclosure described above, the vehicle may be controlled to be parked on the basis of the pre-learned route, which may provide the parking convenience.

In particular, it is possible to implement the parking assistance function while reducing the sophisticated or complex computation by tracking the learned route instead of computing a route in real time.

In addition, the collision prevention function may prevent the occurrence of a collision during the route tracking, which may improve the safety and reliability of the parking assistance function.

The effects capable of being obtained by the present disclosure are not limited to the aforementioned effects, and other effects, which are not mentioned above, will be clearly understood by those skilled in the art from the following description.

### BRIEF DESCRIPTION OF THE DRAWINGS

FIG. 1 is a flowchart for explaining an overall process of performing a parking assistance function capable of being applied to embodiments of the present disclosure.
FIG. 2 is a view illustrating a configuration of the parking assistance system according to the embodiment of the present disclosure.
FIGS. 3 and 4 are views for explaining a process of learning a parking route according to the embodiment of the present disclosure.
FIGS. 5 and 6 are views for explaining a process of tracking a parking route according to the embodiment of the present disclosure.
FIGS. 7 to 9 are views for explaining a collision prevention process performed during the process of tracking the parking route according to the embodiment of the present disclosure.

### DETAILED DESCRIPTION

Specific structural or functional descriptions of embodiments of the present disclosure disclosed in this specification or application are exemplified only for the purpose of explaining the embodiments according to the present disclosure, the embodiments according to the present disclosure may be carried out in various forms, and it should not be interpreted that the present disclosure is limited to the embodiments described in this specification or application.

Because the embodiments according to the present disclosure may be variously changed and may have various forms, specific embodiments will be illustrated in the drawings and described in detail in the present specification or application. However, the descriptions of the specific embodiments are not intended to limit embodiments according to the concept of the present disclosure to the specific embodiments, but it should be understood that the present disclosure covers all modifications, equivalents and alternatives falling within the spirit and technical scope of the present disclosure.

Unless otherwise defined, all terms used herein, including technical or scientific terms, have the same meaning as commonly understood by those skilled in the art to which the present disclosure pertains. The terms such as those defined in commonly used dictionaries should be interpreted as having meanings consistent with meanings in the context of related technologies and should not be interpreted as ideal or excessively formal meanings unless explicitly defined in the present specification.

Hereinafter, embodiments disclosed in the present specification will be described in detail with reference to the accompanying drawings. The same or similar constituent elements are assigned with the same reference numerals regardless of reference numerals, and the repetitive description thereof will be omitted.

In the description of the following embodiments, the term "preset" means that when a parameter is used in a process or algorithm, a value of the parameter is predetermined. The value of the parameter may be set at the beginning of the process or algorithm, according to embodiments, or may be set during an interval in which the process or algorithm is performing.

The suffixes "module", "unit", "part", and "portion" used to describe constituent elements in the following description are used together or interchangeably in order to facilitate the description, but the suffixes themselves do not have distinguishable meanings or functions.

In the description of the embodiments disclosed in the present specification, the specific descriptions of publicly known related technologies will be omitted when it is determined that the specific descriptions may obscure the subject matter of the embodiments disclosed in the present specification. In addition, it should be interpreted that the accompanying drawings are provided only to allow those skilled in the art to easily understand the embodiments disclosed in the present specification, and the technical spirit disclosed in the present specification is not limited by the accompanying drawings, and includes all alterations, equivalents, and alternatives that are included in the spirit and the technical scope of the present disclosure.

The terms including ordinal numbers such as "first," "second," and the like may be used to describe various constituent elements, but the constituent elements are not limited by the terms. These terms are used only to distinguish one constituent element from another constituent element.

When one constituent element is described as being "coupled" or "connected" to another constituent element, it should be understood that one constituent element can be coupled or connected directly to another constituent element, and an intervening constituent element can also be present between the constituent elements. When one constituent element is described as being "coupled directly to" or "connected directly to" another constituent element, it should be understood that no intervening constituent element is present between the constituent elements.

Singular expressions include plural expressions unless clearly described as different meanings in the context.

In the present specification, it should be understood that the terms "comprises," "comprising," "includes," "including," "containing," "has," "having" or other variations thereof are inclusive and therefore specify the presence of stated features, integers, steps, operations, elements, components, or combinations thereof, but do not preclude the presence or addition of one or more other features, integers, steps, operations, elements, components, or combinations thereof.

In addition, the term "control unit" or "unit" included in the name of "motor control unit (MCU)" or "hybrid control unit (HCU)" is merely a term widely used to name a control device (controller or control unit) for controlling a particular vehicle function but does not mean a generic function unit.

A parking assistance function capable of being applied to embodiments to be described below may learn a route actually traveled by a vehicle until the vehicle is completely parked, and the parking assistance function may perform control to allow the vehicle to subsequently track the learned route. Here, learning a route may include recording or training a route, and the learned route may also be referred to as a trained route or a recorded route, for example.

In this case, the learning of the route may include storing and processing information, which corresponds to the route traveled by the vehicle, in a form to be utilized to track the route. The tracking of the route may include recreating or reproducing an actually traveled motion or state of the vehicle on the basis of the learned information.

In this case, the recreation or reproduction does not necessarily need to be consistent, in an intact manner, with the actually traveled motion or state of the vehicle during the learning process. For example, the recreation or reproduction may include recreating or reproducing the actually traveled motion or state of the vehicle in a reverse manner in a direction opposite to a traveling direction of the learned route. In addition, the parking assistance function may perform traveling control, such as acceleration control, deceleration control, shifting control, or steering control, to perform control to allow the vehicle to track the learned route.

In more detail, the parking assistance function capable of being applied to the embodiments may learn information required to allow the vehicle to subsequently track a route actually traveled by a vehicle directly driven by a driver or driven by a driver assistance function from a first point, which is a learning start point, to a second point that is a learning end point.

In this case, the first point may be a periphery of a parking space in which the driver wishes to park the vehicle, e.g., a nearby garage, an entrance to a parking lot, and the like. The second point may be a space, such as an interior of a garage, a parking lane, or a curbside, where the vehicle may be parked or stopped. However, these locations are examples, and the present disclosure is not necessarily limited thereto.

The route tracking along the learned route is not necessarily applied only to the parking situation for the vehicle, but may also be applied to a vehicle exiting situation along the same route. Therefore, in case that the vehicle tracks the learned route in the parking situation, the vehicle tracks the learned route in the direction from the first point to the second point by means of this function. In cases when the vehicle tracks the learned route in the vehicle exiting situation, the vehicle may track the learned route in the direction from the second point to the first point.

It is noted that the position at which the driver activates the learned route tracking may vary each time the parking assistance function is provided. For example, in the parking situation, it is difficult for the driver to activate the route tracking accurately at the first point each time. In the vehicle exiting situation, a position, at which the route tracking is activated to avoid an adjacent obstacle in the state in which the vehicle is parked or to manually park the vehicle, may not be accurately consistent with the second point. Therefore, when the route tracking is activated, the parking assistance function creates a route from a current position to the first point, the second point, or one point on the learned route between the first and second points (e.g., a close point to which the vehicle may reach within a limited steering angle), such that the vehicle may enter the learned route and track the remaining route in the corresponding traveling direction in accordance with whether the vehicle is parked or exits.

In this respect, the parking assistance function may be distinguished from a memory reverse assist (MRA) function that stores a real-time position each time the vehicle travels, necessarily sets a current position as a finally stored point, and supports only the reverse motion. Further, the parking assistance function may be distinguished from an autonomous driving or parking function that creates a point level pass each time between the current position and a destination. In particular, according to the parking assistance function, the vehicle tracks the route learned in advance without creating a new route each time after the vehicle enters the learned route, and the vehicle may be parked or exit, such that a computation load may be mitigated, and a likelihood of error caused by real-time computation may be reduced.

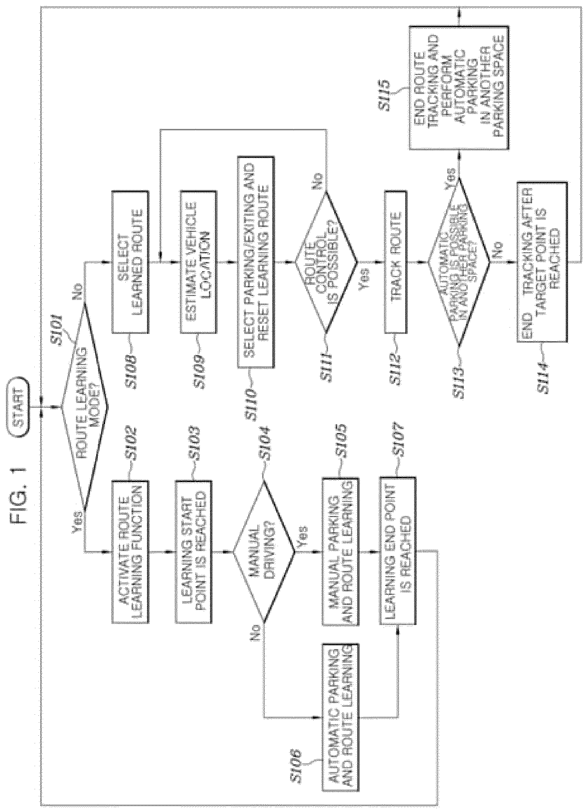

Hereinafter, prior to the detailed description of components and operations of a parking assistance system 100 according to the embodiment of the present disclosure capable of performing the parking assistance function, an overall process of performing the parking assistance function implemented by the parking assistance system 100 will be described with reference to FIG. 1.

FIG. 1 is a flowchart for explaining the overall process of performing the parking assistance function capable of being applied to the embodiments of the present disclosure.

With reference to FIG. 1, the parking assistance function capable of being implemented by the parking assistance system 100 may include a process of selecting a mode to be performed between a route learning mode and a route tracking mode (S101). In this case, whether to perform the route learning mode or the route tracking mode may be determined depending on an input of a vehicle user such as a driver.

That is, the vehicle user may select the route learning mode when the vehicle user wishes to learn a new route as necessary. Further, the vehicle user may select the route tracking mode when the vehicle user wishes to park the vehicle along the previously learned route.

In cases that the route learning mode is selected (Yes in S101), the route learning function may be activated (S102), such that the route learning includes storing route information as the route actually is traveled by the vehicle. In this case, the route information may include information, such as a position, a heading angle, a transmission gear, or a speed of the vehicle, corresponding to the motion of the vehicle that is moving along the route, and the route information may be stored in real time or at a predetermined time interval.

Meanwhile, a start point at which the route learning starts may be determined depending on settings. For example, the start point may be a position of the vehicle at a time point at which the route learning mode is selected, a position forward or rearward of the current position of the vehicle at a predetermined distance, a position of the vehicle after a predetermined time elapses from the current time point, or a particular position on a navigation map. Further, the learning start point may be set by the input of the vehicle user, like the process of selecting the mode.

Thereafter, when the vehicle reaches the learning start point in the state in which the route learning function is activated (S103), the learning of the route traveled by the vehicle is performed from the start point.

In this case, the route traveled by the vehicle may be made as the driver directly parks the vehicle by manipulating the vehicle (Yes S104). Alternatively, the route traveled by the vehicle may be a traveling route made by an automatic parking function mounted in the vehicle (No in S104).

In this case, the automatic parking function may refer to a function of moving the vehicle by controlling steering and/or acceleration of the vehicle without requiring the driver's manipulation to the selected parking space. The automatic parking function may include a function of detecting an available parking space based on the current position of the vehicle and moving the vehicle to the detected space.

Therefore, depending on whether the vehicle is parked manually or by the automatic parking function (S104), a route along which the driver manually parks the vehicle by manipulating the vehicle or a route made by the automatic parking function is learned (S105 or S106).

The route learning continues while the vehicle moves, and the route learning ends when the vehicle reaches a targeted parking space (S107). For example, the route learning may automatically end when the vehicle reaches a preset parking space. Alternatively, the route learning may end when a shift position is changed to a parking position P after the vehicle is stopped or when the vehicle user inputs an instruction to end the route learning function.

The description of the route learning function described above is based on the situation in which the vehicle is parked. Alternatively, the route learning function may also be applied, in the same way, to a case in which the vehicle exits the parking space.

Meanwhile, in case that the route tracking mode is selected (No in S101), the route tracking function is activated, such that the vehicle may be controlled to move while tracking the learned route. Therefore, at least one route learning result may be required to perform the route tracking mode.

In addition, in case that a plurality of route learning results is present as the route learning is performed multiple times, the vehicle user may select any one from the plurality of route learning results (S108). In this case, the vehicle is controlled to move while tracking a route corresponding to the selected learning result.

The position of the vehicle may be utilized when the vehicle is controlled to move while tracking the learned route as described above. In this case, the position of the vehicle may be estimated by a simultaneous localization and mapping (SLAM) technology (S109). In case that the position of the vehicle is estimated by the SLAM technology, the position of the vehicle may be recognized even in case that communication cannot be performed. However, the method of estimating the position of the vehicle is not necessarily limited thereto. For example, global positioning system (GPS) coordinates may be used together with or instead of the position of the vehicle.

After the learned route is selected (S108) and the position of the vehicle is estimated (S109), a tracking direction may be set, i.e., whether to park the vehicle or allow the vehicle to exit along the learned route may be set (S110). Which of the two opposite end points of one learned route is determined as a targeted point of the route tracking depending on the preset parking or exiting status. Therefore, both parking control and vehicle exiting control may be performed along one route.

Meanwhile, because the items to be considered to control the traveling of the vehicle may vary when the vehicle is parked and exit, the learned route may be reset depending on whether the vehicle is parked or exit. In this case, the resetting of the learned route may include sorting, classifying, and processing route information. In addition, the order in which steps S109 and S110 are performed may be interchanged or steps S109 and S110 may be simultaneously performed depending on the implementation.

Thereafter, whether the vehicle may be controlled to track the learned route may be determined depending on the selected route, the position of the vehicle, and the tracking direction (whether the vehicle is parked or exits). In cases where the above-mentioned control is possible (Yes in S111), the vehicle is controlled to move while tracking the learned route (S112), and as a result, the control ends when the vehicle reaches the target point (S113). In this case, the configuration in which the vehicle is controlled to track the learned route may refer to whether the vehicle may enter one point on the parking route selected at the current position of the vehicle. In this case, the elements to be considered may include whether the route may be created to one point (e.g., an index to be described below) on the selected route in accordance with a maximum steering angle or a minimum rotation radius of the vehicle, the presence or absence of obstacles, and whether avoidance of an obstacle is enabled when the obstacle is present. However, this is an example, and the present disclosure is not necessarily limited thereto.

In addition, whether the control may be performed may be determined again depending on a newly estimated position when the position of the vehicle is changed even in case that the vehicle cannot be controlled to track the learned route (No in S111) in accordance with the selected parking route, the position of the vehicle, and the tracking direction (whether the vehicle is parked or exits).

Further, the parking assistance function may include a collision prevention function of preventing a collision with an obstacle when the obstacle is detected during the route tracking process (S112). In this case, the collision prevention control may include avoidance/return route creation and tracking control that decelerates or stops the vehicle before a collision with the obstacle by braking the vehicle or returning the vehicle to the route after avoiding the obstacle by performing steering control.

Meanwhile, in case that automatic parking to a parking space different from the target point on the current parking route is possible while the vehicle is parked while tracking the learned route (Yes in S113), the automatic parking function of moving the vehicle to another parking space may be performed (S115) instead of controlling the vehicle so that the vehicle moves while tracking the learned parking route. In this case, whether the automatic parking to another parking space is possible may be determined depending on whether an available parking space (e.g., an empty space that the vehicle may enter from the current position of the vehicle) is detected or whether the automatic parking function is activated by the setting. Further, whether the detected available parking space is a location at which the vehicle is easily parked in comparison with the target point on the parking route may be additionally considered.

Meanwhile, in case that the automatic parking function is not performed (S113) because the automatic parking function is deactivated or the available parking space is not detected, the route tracking ends after the vehicle reaches the target point while tracking the parking route (S114).

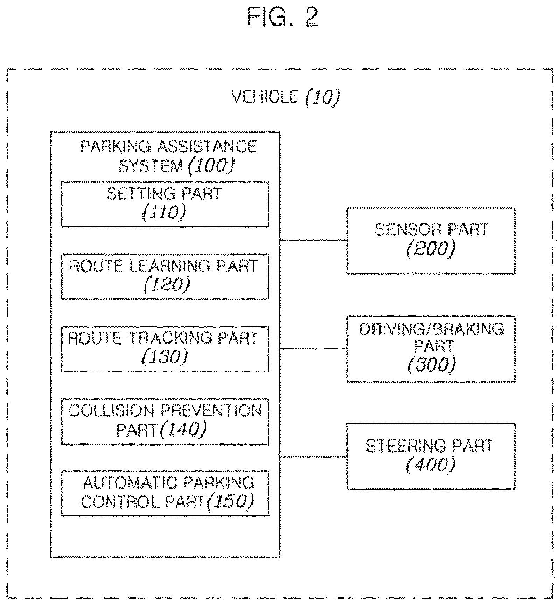

Hereinafter, the components and operations of the parking assistance system 100 according to the embodiment for performing the above-mentioned parking assistance function will be described with reference to FIG. 2.

FIG. 2 is a view illustrating a configuration of the parking assistance system according to the embodiment of the present disclosure.

With reference to FIG. 2, the parking assistance system 100 according to the embodiment may include a setting part 110, a route learning part 120, a route tracking part 130, and a collision prevention part 140 and be implemented for a vehicle 10 or in the vehicle 10. In addition, in order to perform the functions, the parking assistance system 100 may be connected to a sensor part 200, a driving/braking part 300, and a steering part 400 in the vehicle 10 and obtain necessary information or provide an instruction for control.

First, the setting part 110 may receive the selection by the user of the vehicle 10, such as the driver, on the parking assistance function. For example, the user's selection may include whether the route learning mode or the route tracking mode is performed, the selection of the learned parking route to be described below, the tracking direction, and whether the automatic parking function is activated.

The above-mentioned input to the setting part 110 may be performed by various forms, e.g., a graphic user interface (GUI) provided through a display of an AVNT (Audio/Video/Navigation/Telematics) terminal or performed by manipulating a key button on which a mode selection function is mapped. Alternatively, the input may be performed as a voice instruction input through a microphone. However, the method of selecting the mode is an example,and the present disclosure is not necessarily limited thereto.

The route learning part 120 may learn the parking route as the route that the vehicle 10 travels from the learning start point until the vehicle is parked at a learning end point while the route learning mode is performed by the user's input through the setting part 110. To this end, the route learning part 120 may acquire information on the traveling of the vehicle from the sensor part 200. For example, the route learning part 120 may acquire sensing values of a speed/acceleration sensor included in the sensor part 200, sensing values of an accelerator pedal position sensor and a position sensor of a brake pedal, sensing values of a position sensor such as a GPS sensor, sensing values of a posture sensor such as a gyroscope, sensing values of a transmission position sensor, and the like.

The route tracking part 130 may control the traveling of the vehicle so that the vehicle 10 enters the parking route learned by the route learning part 120 and travels while tracking the learned parking route from the entering point while the route tracking mode is performed by the user's input through the setting part 110.

More specifically, when a pre-learned parking route and a tracking direction related to the parking route are selected, the route tracking part 130 may control the vehicle so that the vehicle tracks the parking route selected from the point at which the vehicle enters the parking route to the target point corresponding to the tracking direction between the learning start point and the learning end point of the selected parking route.

For example, the tracking direction may include a first tracking direction with the learning end point as the target point, and a second tracking direction with the learning start point as the target point. In this case, the user of the vehicle 10 may select the first tracking direction in the parking situation so that the vehicle 10 may move along the parking route to the learning end point, i.e., to a previous parking space. The user of the vehicle 10 may select the second tracking direction in the vehicle exiting situation so that the vehicle 10 moves along the parking route to the learning start point, i.e., to a point at which the vehicle starts parking.

Therefore, the parking assistance system 100 according to the embodiment may provide convenience for the parking situation and the vehicle exiting situation through one learned parking route without creating or learning a plurality of routes respectively corresponding to the parking situation and the vehicle exiting situation.

The collision prevention part 140 may control the traveling of the vehicle 10 on the basis of a position of an obstacle present in a preset collision range from the parking route while the vehicle 10 travels while tracking the parking route.

An automatic parking control part 150 may control the traveling of the vehicle 10 while the vehicle 10 moves to the parking space without requiring the driver's manipulation during the operation in the route learning mode or the operation in the route tracking mode. For example, the automatic parking control part 150 may create a route on the basis of the current position of the vehicle 10 and a destination and control the vehicle 10 so that the vehicle 10 moves to the created route. The automatic parking made by the automatic parking control part 150 may be distinguished from the traveling control made by the route tracking part 130 in that the automatic parking may be performed regardless of the parking route learned by the route learning part 120.

The route tracking part 130, the collision prevention part 140, and the automatic parking control part 150 may transmit the control instructions to the driving/braking part 300 and the steering part 400 in order to control the traveling of the vehicle 10. More specifically, the route tracking part 130 and the collision prevention part 140 may control the acceleration and deceleration of the vehicle 10 in response to the control instruction for the driving/braking part 300 or control the steering of the vehicle 10 in response to the control instruction for the steering part 400. In this case, the driving/braking part 300 may include a motor, an inverter, an engine, a brake, and the like, and the steering part 400 may include a steering wheel.

Meanwhile, the parking assistance system 100 may include a communication device configured to communicate with another controller (e.g., a motor controller, a vehicle controller, an autonomous driving controller, or the like) or various types of sensors, a memory configured to store an operating system or a logic instruction and an input/output information, and one or more processors configured to perform determination, computation, judgment, and the like required to control a responsible function in order to control the functions designated to the setting part 110, the route learning part 120, the route tracking part 130, the collision prevention part 140, and the automatic parking control part 150.

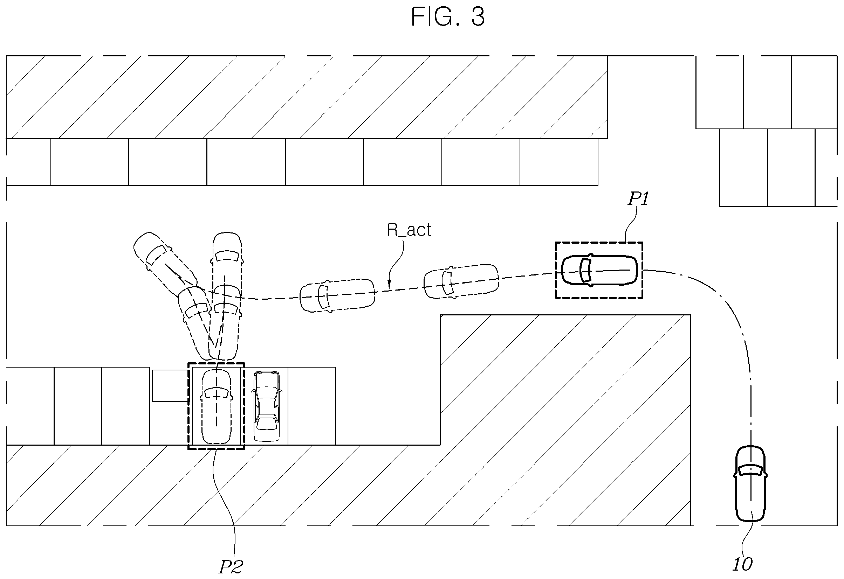

Hereinafter, the operation of the route learning part 120 will be described in more detail with reference to FIGS. 3 to 4.

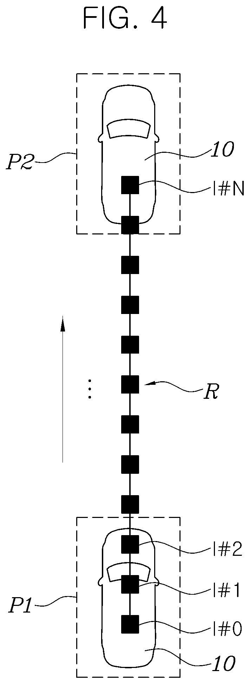

FIGS. 3 and 4 are views for explaining a process of learning the parking route according to the embodiment of the present disclosure.

First, FIG. 3 illustrates a process in which the vehicle 10 moves to a learning end point P2 along a parking route R and is parked.

In the state in which the route learning mode is performed, the route learning part 120 may learn the parking route from a learning start point P1. In this case, the learning start point P1 may not be consistent with the current position of the vehicle 10.

After the learning of the parking route starts from the learning start point P1, the parking route is learned as a route R_act that the vehicle 10 actually travels to the learning end point P2. When the vehicle 10 reaches the learning end point P2 and is completely parked, the learning ends, and the movement route of the vehicle 10 learned so far is acquired as the parking route that is a result of the learning.

Meanwhile, this process may be repeated multiple times, such that the route learning part 120 may have a plurality of parking routes. In this case, the different parking routes may have different learning start points P1 and different learning end points P2. In addition, movement routes, which have the same learning start point P1 and the same learning end point P2 and have different traveling processes between the learning start point P1 and the learning end point P2, may be learned as the parking routes. In cases that the plurality of parking routes is learned as described above, the user of the vehicle 10 may use the parking assistance function by selecting any one of the plurality of parking routes, and the above-mentioned selection may be inputted through the setting part 110.

More specifically, with reference to FIG. 4 related to the route learning, the route learning part 120 may store route information, which corresponds to the actual traveled motion of the vehicle 10 on the route that the vehicle 10 travels from the learning start point P1 and actually moves until the vehicle is parked at the learning end point P2, for each of index points I#0, I#1, I#2, ..., and I#N having preset distance intervals, and the route learning part 120 may learn the parking route R as the route that the vehicle 10 moves to the learning end point P2.

In this case, for example, the index points I#0, I#1, I#2, ..., and I#N may be set to have an interval of 1 m. However, the present disclosure is not necessarily limited thereto. The index points may be set differently depending on the needs or preferences.

In addition, the route information may include at least one of position information, posture information, and gear information of the vehicle 10 at the index points I#0, I#1, I#2, ..., and I#N. For example, the route information may be stored in the form of a table below.

**[Table 1]**

| Index | X | Y | ψ | Gear |
|---|---|---|---|---|
| I#0 | X#0 | Y#0 | ψ#0 | Gear#0 |
| I#1 | X#1 | Y#1 | ψ#1 | Gear#1 |
| I#2 | X#2 | Y#2 | ψ#2 | Gear#2 |
| ... | | | | |
| I#N | X#N | Y#N | ψ#N | Gear#N |

Here, X and Y correspond to coordinates corresponding to the position of the vehicle 10 for each of the index points I#0, I#1, I#2, ..., and I#N in a global coordinate system with an initial index point I#0 included in the learning start point P1 as an origin (i.e., 0, 0). ψ represents the heading angle of the vehicle 10 for each of the index points I#0, I#1, I#2, ..., and I#N. For example, the heading angle may refer to an angle between a direction in which the vehicle body is directed at the initial index point I#0 and a direction in which the vehicle body is directed at the subsequent index point I#1, I#2, ..., and I#N. Gear represents gear shift positions at the index points I#0, I#1, I#2, ..., and I#N and may include D (forward), R (reverse), N (neutral), P (parking), for example.

The above-mentioned route information may be acquired by the sensor part 200 as described above with reference to FIG. 2. In particular, in the embodiment, the position of the vehicle estimated by the SLAM technology may be utilized as the position information. In this case, the SLAM may be performed by estimating the position of the vehicle 10 on a map that is created starting from the learning start point P1 and originating from the starting point. However, the present disclosure is not necessarily limited thereto. The GPS coordinate may be utilized as the position information, or the position, which is estimated by SLAM, and the GPS coordinate may be utilized together as the position information.

Meanwhile, during the above-mentioned route learning process, the vehicle 10 may be driven by the driver's manipulation. However, the vehicle 10 may be driven by the automatic parking function of the automatic parking control part 150. For example, when a preset automatic parking condition is satisfied during the operation in the route learning mode, the automatic parking control part 150 may control the traveling of the vehicle 10 so that the vehicle 10 moves to the learning end point P2, i.e., the parking space. In this case, whether the automatic parking condition is satisfied may be determined depending on whether the available parking space is present on the basis of the current position of the vehicle 10 and the surrounding environment, whether the user's automatic parking function is activated, and the like. In this case, the surrounding environment of the vehicle 10 may be detected by a camera, a radar sensor, an ultrasonic sensor, and the like included in the sensor part 200. Whether the automatic parking function is activated may be inputted through the setting part 110.

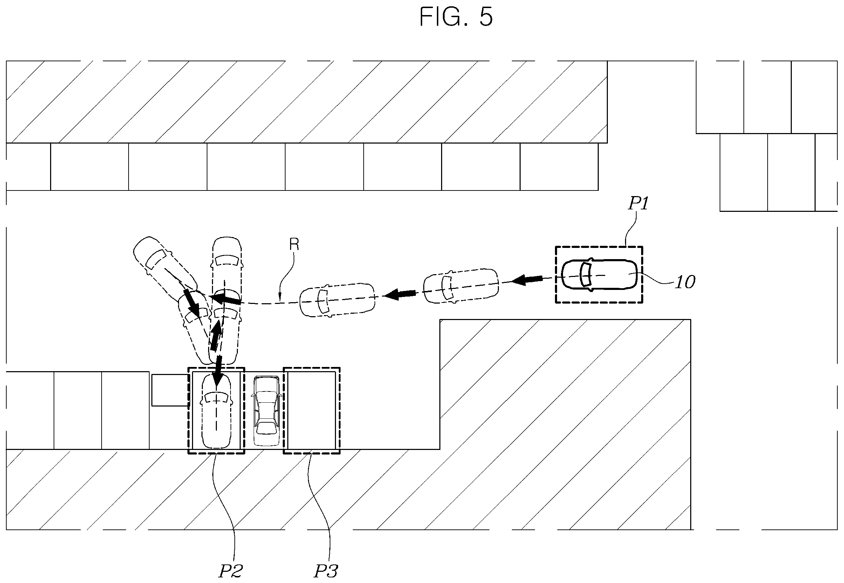

Hereinafter, the operation of the route tracking part 130 will be described in more detail with reference to FIGS. 5 to 6.

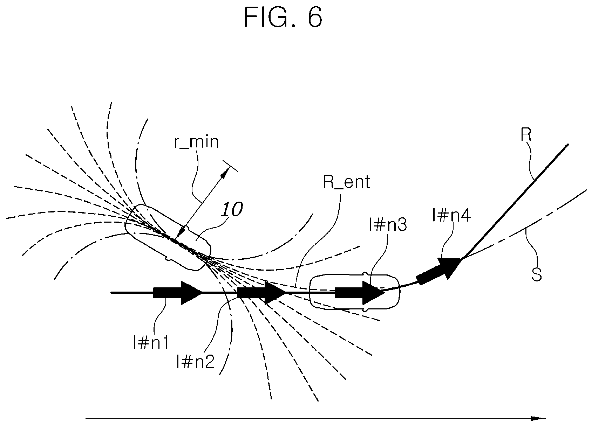

FIGS. 5 and 6 are views for explaining a previous a process of tracking the parking route according to the embodiment of the present disclosure.

First, FIG. 5 illustrates a process in which the vehicle 10 moves to the parking space while tracking the learned parking route R and is parked.

The route tracking part 130 may control the vehicle 10 so that the vehicle 10 moves from any point on the learned parking route R to the learning end point P2 along the parking route R.

To this end, the route tracking part 130 may perform the route tracking control by controlling the traveling of the vehicle 10 on the basis of the route information corresponding to the index points each time the vehicle 10 is positioned at each of the index points on the parking route R. For example, the route tracking control may be performed to reproduce the traveling motion corresponding to the index points of the vehicle 10 on the basis of the position information, the posture information, and the gear information on the table related to the route information described with reference to FIGS. 3 and 4.

Meanwhile, when the preset automatic parking condition is satisfied during the route tracking process performed by the route tracking part 130, the automatic parking control part 150 may control the traveling of the vehicle so that the vehicle 10 moves to a position other than the learning end point P2 on the learned parking route R and is parked.

In this case, whether the automatic parking condition is satisfied may be determined depending on whether a new available parking space P3 is present on the basis of the current position of the vehicle 10 and the surrounding environment, whether the user's automatic parking function is activated, whether the current situation is the parking situation between the parking situation and the vehicle exiting situation, and the like. In this case, the surrounding environment of the vehicle 10 may be detected by the camera, the radar sensor, the ultrasonic sensor, and the like included in the sensor part 200. Whether the automatic parking function is activated may be inputted through the setting part 110.

Therefore, in cases that the vehicle may be parked along a shorter route or a more convenient route other than the learning end point P2 on the learned parking route R, the vehicle may be parked by a more advantageous method depending on the circumstances without being necessarily restricted by the learned parking route R.

More specifically, with reference to FIG. 6 related to the route tracking, the route tracking part 130 may control the vehicle 10 so that the vehicle 10 enters any one point among the index points I#n1, I#n2, I#n3, and I#n4 on the parking route R and tracks the parking route R from the entering point.

In order to determine the entering point to the parking route R, the route tracking part 130 may select a current tracking factor on the basis of the current position of the vehicle 10 and the route information at the index points I#n1, I#n2, I#n3, and I#n4. In this case, the route tracking part 130 may recognize the current position of the vehicle 10 and the positions of the index points I#n1, I#n2, I#n3, and I#n4 on the map created by the SLAM technology and perform the route tracking.

More specifically, when the vehicle 10 travels from the current position and satisfies the route information at the corresponding point for at least one of the index points I#n1, I#n2, I#n3, and I#n4, the route tracking part 130 may determine whether an entering route through which the vehicle may enter the parking route R may be created, and the route tracking part 130 may select the index point, at which the entering route may be created, as the current tracking factor.

In this case, whether the entering route may be created may be determined depending on the restriction to a rotation radius or a steering angle of the vehicle 10. For example, it may be determined that the entering route may be created in case that the vehicle 10 travels from the current position along a trajectory with a minimum rotation radius r_min or larger and the route information at the corresponding point, particularly, the posture information including the heading angle is satisfied. In this case, the minimum rotation radius r_min is a rotation radius when a steering wheel of the vehicle 10 is positioned at a rotatable maximum angle, and the minimum rotation radius r_min may vary depending on the structure of the vehicle 10.

In addition, in cases that there are several index points at which the entering route may be created, the route tracking part 130 may select the index point, which is closest to the current position of the vehicle 10 among the index points, as the current tracking factor, and the tracking direction may also be taken into account.

For example, it may be determined that an entering route R_ent along which the vehicle may travel from the current position of the vehicle 10 along the trajectory with the minimum rotation radius r_min or larger and enter the parking route R while satisfying the heading angle at the corresponding point at the index points I#n3 and I#n4 among the plurality of index points I#n1, I#n2, I#n3, and I#n4 illustrated in FIG. 6. In this case, the route tracking part 130 may select the index point I#n3, which is closest to the current position of the vehicle 10 in the tracking direction between the two index points I#n3 and I#n4, as the current tracking factor.

When the current tracking factor is selected as described above, the route tracking part 130 may control the vehicle 10 so that the vehicle 10 enters the parking route R with the current tracking factor as the entering point.

When the current tracking factor is selected, the route tracking part 130 may select the index point, which is positioned after the preset order from the current tracking factor, as a target tracking factor. In this case, the index point, which is positioned after the preset order, may refer to the immediately next index point in the tracking direction of the parking route R. For example, as in the above-mentioned example, in case that the index point I#n3 is selected as the current tracking factor, the next index point I#n4 may be selected as the target tracking factor. However, the present disclosure is not necessarily limited thereto. According to the embodiment, some of the index points may be skipped, and the next index point may be selected as the target tracking factor.

Meanwhile, once the vehicle 10 enters the parking route R, the closest index point based on the tracking direction on the parking route R may be simply selected as the current tracking factor instead of determining whether the entering route may be created.

When the current tracking factor and the target tracking factor are selected as described above, the route tracking part 130 may control the vehicle 10 on the basis of the selected current tracking factor and the selected target tracking factor so that the vehicle 10 tracks the parking route R.

That is, after the vehicle 10 enters the parking route R, the route tracking part 130 may control the vehicle 10 only on the basis of the route information corresponding to the currently selected current tracking factor and the target tracking factor so that the vehicle 10 tracks the parking route R without a necessity of considering all the pieces of route information corresponding to the plurality of index points I#n1, I#n2, I#n3, and I#n4 for each time point.

More specifically, the route tracking part 130 may determine a target steering angle between the current tracking factor and the target tracking factor on the basis of the difference between the pieces of route information corresponding to the current tracking factor and the target tracking factor and control the steering of the vehicle on the basis of the target steering angle until the vehicle 10 reaches the target tracking factor from the current tracking factor. In this case, the target steering angle may be determined depending on a difference between position information and posture information on the route information corresponding to the current tracking factor and position information and posture information on the route information corresponding to the target tracking factor.

The steering control according to the target steering angle between the current tracking factor and the target tracking factor may be expressed as a steering angle curve S illustrated in FIG. 6. The steering angle of the vehicle 10 may be controlled along the steering angle curve S under the control of the route tracking part 130. When the vehicle 10 reaches the target tracking factor, the steering angle of the vehicle 10 may be controlled along another steering angle curve by newly selected current and target tracking factors.

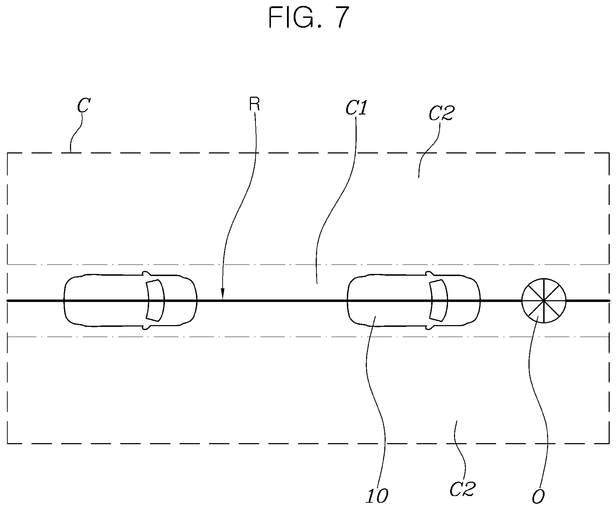

Hereinafter, the operation of the collision prevention part 140 will be described in detail with reference to FIGS. 7 to 9.

FIGS. 7 to 9 are views for explaining a collision prevention process performed during the process of tracking the parking route according to the embodiment of the present disclosure.

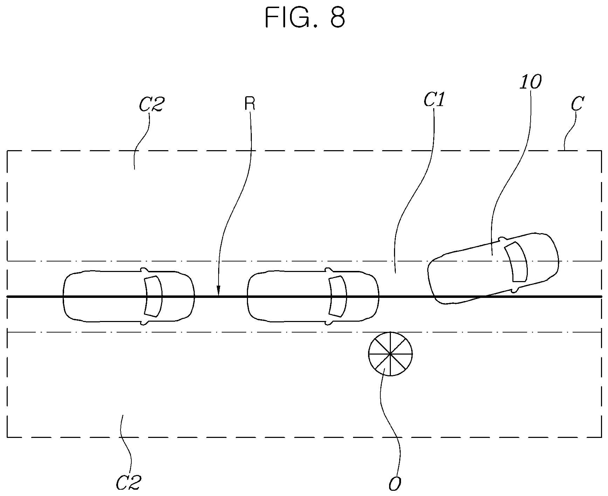

First, with reference to FIGS. 7 and 8 together, a collision range C is set on the basis of the learned parking route R. For example, the specific range may be set in consideration of a length or a width of the vehicle 10, a rotation radius of the vehicle 10, and the like.

In addition, the collision range C may be divided into a first region C1 and a second region C2, the first region C1 may be defined as a region that overlaps the parking route R in the collision range C, and the second region C2 may be defined as a region excluding the first region C1 in the collision range C.

The collision prevention part 140 may perform the traveling control for preventing a collision between the vehicle 10 and an obstacle O on the basis of the above-mentioned collision range C and the position of the obstacle O. In this case, the position of the obstacle O may be detected by the camera, the radar sensor, the ultrasonic sensor, and the like of the sensor part 200, and the traveling control may include braking control and steering control of the vehicle 10.

In addition, the collision prevention part 140 may perform a collision warning output together with or separately from the braking control and the steering control. Therefore, it is possible to inform the user of the vehicle 10 of a risk of a collision. In this case, for example, the collision prevention part 140 may output a collision warning through a screen or an audio device provided in the vehicle 10.

More specifically, with reference to FIG. 7, the collision prevention part 140 may perform the braking control on the vehicle 10 in case that the obstacle O is positioned at the first region C1 that overlaps the parking route R in the collision range C. With the above-mentioned braking control, the vehicle 10 may be stopped or decelerated before a collision with the obstacle O, such that the collision may be prevented. In this case, the route tracking part 130 may stop the route tracking control in order to prevent a collision caused by an additional movement.

However, when a resume tracking instruction is inputted within a preset time from a time point at which the route tracking is stopped, the route tracking part 130 may control the vehicle 10 again so that the vehicle 10 tracks the parking route R.

For example, in case that the user of the vehicle 10 identifies that there is no obstacle at the periphery with the naked eye in a state in which the vehicle 10 is stopped and the route tracking control is released by the braking control of the collision prevention part 140, the user of the vehicle 10 may determine that an obstacle is erroneously recognized, and the user of the vehicle 10 may input the resume tracking instruction through the setting part 110 so that the route tracking part 130 may restart the route tracking. Therefore, it is possible to prevent an inconvenient situation in which the route tracking control is released by the erroneous recognition of the obstacle O.

However, in order to prevent an adverse effect, such as an excessively maintained route tracking standby state or a loss of obstacle detection data, that may affect the route tracking or the collision prevention, the route tracking part 130 may not restart the route tracking control even though the resume tracking instruction is inputted after a preset time elapses from the time point at which the route tracking is stopped.

Meanwhile, with reference to FIG. 8, the collision prevention part 140 may perform the steering control on the vehicle 10 in case that the obstacle O is positioned in the second region C2 that is a region excluding the first region C1 in the collision range C. Therefore, in case that the obstacle O is positioned at the periphery of the parking route R but the obstacle O is not positioned directly on the parking route R, the collision prevention part 140 may perform control to avoid the obstacle O by temporarily performing the steering control instead of stopping or retarding the traveling of the vehicle 10 by braking the vehicle. However, even in this case, the braking control may be performed together. In this case, the braking control may be performed at a level at which the vehicle 10 keeps traveling at a low speed, instead of stopping the vehicle 10.

Meanwhile, in order to prevent a collision by performing the steering control, a bypass route for avoiding the obstacle O may be created, and a return route for returning the vehicle to the parking route R after avoiding the obstacle O may be created. Therefore, the tracking of the parking route R may be maintained.

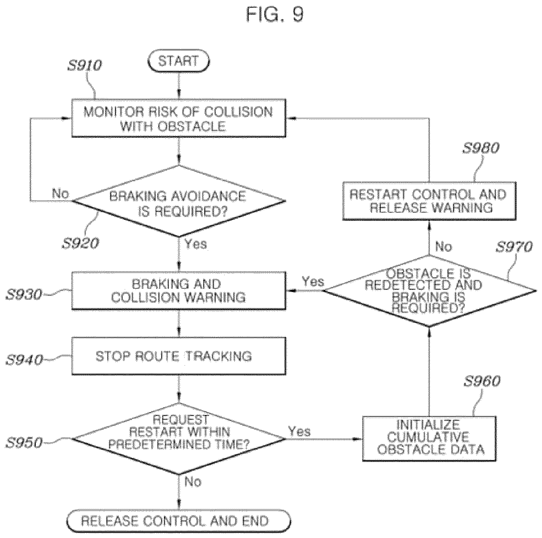

The above-mentioned collision prevention process is expressed by a flowchart in FIG. 9.

With reference to FIG. 9, the collision prevention part 140 may monitor a risk of a collision with the obstacle O on the basis of the parking route R and the position of the obstacle O during the route tracking control performed by the route tracking part 130 (S910) and determine the necessity of avoiding a collision by performing the braking control on the basis of the monitoring result (S920). In this case, for example, the necessity of avoiding a collision by performing the braking control may be determined depending on the first region C1 of the collision range C.

In case that the determination result indicates that the collision avoidance by the braking control is required (Yes in S920), the collision prevention part 140 performs the braking control on the vehicle 10 by means of the driving/braking part 300 and outputs a collision warning (S930).

The route tracking control of the route tracking part 130 is stopped by the braking control (S940). In case that the resume tracking instruction is not inputted within the preset time from the time point at which the route tracking control is stopped (No in S950), the tracking control is released, and the parking assistance function ends.

However, in case that the resume tracking instruction is inputted within the preset time from the time point at which the route tracking is stopped (Yes in S950), the cumulative obstacle data, which has caused the braking control, may be initialized (S960), and the necessity of the braking control may be determined again depending on newly acquired obstacle data (S970).

In case that the determination result indicates that the braking control is not required (No in S970), it may be determined that the risk of the collision is erroneously determined, such that the warning is released, and the route tracking may be restarted (S980). However, in case that it is determined that the braking control is still required even in case that the necessity of the braking control is determined again on the basis of the newly acquired obstacle data, the route tracking may not be restarted, and the processes subsequent to the braking control S930 may be performed again.

According to various embodiments of the present disclosure described above, the vehicle may be controlled to be parked on the basis of the pre-learned route, which may provide the parking convenience.

In particular, it is possible to implement the parking assistance function while reducing the sophisticated or complex computation by tracking the learned route instead of computing a route in real time.

In addition, the collision prevention function may prevent the occurrence of a collision during the route tracking, which may improve the safety and reliability of the parking assistance function.

## Claims

1. A parking assistance system for a vehicle, the parking assistance system including:
a route learning part configured to learn at least one parking route based on a route that the vehicle has traveled from a learning start point until the vehicle is parked at a learning end point when a route learning mode is activated; and
a route tracking part configured to control the vehicle so that when a route tracking mode is activated and any one of at least one pre-learned parking route and a tracking direction are selected, the vehicle enters the selected parking route and tracks the selected parking route from an entering point corresponding to a point that the vehicle entered the selected parking route to a target point corresponding to the tracking direction among the learning start point and the learning end point of the selected parking route.

2. The parking assistance system of claim 1, wherein the route learning part learns the parking route traveled by the vehicle by storing route information which corresponds to motion of the vehicle at index points at preset distance intervals along the parking route.

3. The parking assistance system of claim 2, wherein the route information includes at least one of location information, posture information, and gear information of the vehicle at each of the index points.

4. The parking assistance system of claim 2, or 3, wherein the route tracking part selects an index point among the index point of the pre-selected parking route at which the route tracking part can generate an entering route through which the vehicle can enter the pre-learned parking route while satisfying the route information associated with the corresponding index point from the current location of the vehicle, as a current tracking factor, and the route tracking part controls the vehicle to enter the parking route through the current tracking factor.

5. The parking assistance system of claim 4, wherein the route tracking part determines a target steering angle of the vehicle based on a difference between the route information of the current tracking factor and a target tracking factor which corresponds to an index point after the preset order from the index point associated with the current tracking factor, and the route tracking part controls steering of the vehicle based on the target steering angle until the vehicle reaches the target tracking factor from the current tracking factor.

6. The parking assistance system of claim 4, or 5, wherein the route tracking part acquires a current location of the vehicle by simultaneous localization and mapping (SLAM).

7. The parking assistance system of any one of claims 1 to 6, further including:
an automatic parking control part configured to control the vehicle to move to the learning end point and to park when a preset automatic parking condition is satisfied during an operation in the route learning mode, and to control the vehicle to move to a position other than the learning end point and is to park when the preset automatic parking condition is satisfied during the operation in the route tracking mode.

8. The parking assistance system of any one of claims 1 to 7, further including:
a collision prevention part configured to control traveling of the vehicle based on a position of an obstacle present within a preset collision range from the parking route while the vehicle tracks the selected parking route.

9. The parking assistance system of claim 8, wherein the collision prevention part performs at least one of braking control and a collision warning output on the vehicle when the obstacle is located in a first region that overlaps the selected parking route in the collision range.

10. The parking assistance system of claim 9, wherein the route tracking part stops tracking the selected parking route when the braking control is performed, and
wherein the route tracking part controls the vehicle so that the vehicle travels again while tracking the selected parking route when a resume tracking instruction is received within a preset time from a time at which the route tracking is stopped.

11. The parking assistance system of claim 9, or 10, wherein the collision prevention part performs at least one of steering control and the collision warning output on the vehicle when the obstacle is located in a second region excluding the first region in the collision range.

12. The parking assistance system of any one of claims 1 to 11, wherein the tracking direction includes:
a first tracking direction with the learning end point as the target point; and
a second tracking direction with the learning start point as the target point.
